# EUROPEAN PATENT APPLICATION

(11) **EP 0 783 030 A1**
(43) Date of publication of application: **09.07.1997**
(21) Application number: 97300045.8
(22) Date of filing: 07.01.1997
(51) Int. Cl.: C09J 131/04, C09J 127/06

(54) **Aqueous emulsion adhesive**

(30) Priority: 08.01.1996 JP 611/96
(71) Applicant: SUMITOMO CHEMICAL COMPANY LIMITED, Osaka-shi, Osaka 541 (JP)
(72) Inventor: Shibata, Yutaka, Ichihara-shi, Chiba (JP); Murai, Hiroshi, Ichihara-shi, Chiba (JP); Sakakibara, Katsumi, Ichihara-shi, Chiba (JP); Yoshii, Yuuzi, Sodegaura-shi, Chiba (JP)
(74) Representative: Woods, Geoffrey Corlett

(57) **Abstract**

An aqueous emulsion adhesive obtainable by blending a polyvinyl alcohol and a compound or polymer having isocyanate groups with an aqueous emulsion, which aqueous emulsion comprises an ethylene-vinyl acetate-vinyl chloride type copolymer having a glass transition temperature from -10 to +40°C and comprising 2 to 40% by weight of ethylene, 3 to 93% by weight of vinyl acetate and 5 to 85% by weight of vinyl chloride, said copolymer being obtainable by polymerization in the presence of an emulsifier consisting essentially of 2 to 13 parts by weight of a polyvinyl alcohol based on 100 parts by weight of the total amount of vinyl acetate and vinyl chloride.

## Description

The present invention relates to an aqueous emulsion adhesive. More particularly, the present invention relates to an aqueous emulsion adhesive which maintains the adhesion strength at a sufficiently high level and provides a long workable time since thickening with lapse of time and foaming of the adhesive are at a low level, and which is consequently excellent in workability.

An aqueous emulsion adhesive obtained by blending a polyvinyl alcohol and a compound or polymer having isocyanate groups with an aqueous emulsion containing an ethylene-vinyl acetate-vinyl chloride type copolymer, is known and disclosed, for example, in Japanese Unexamined Patent Publication 82540/1995.

However, for obtaining the aqueous emulsion adhesive specifically disclosed in Japanese Unexamined Patent Publication 82540/1995, an emulsifier composed of a cellulose derivative and an nonionic or anionic surfactant is used for copolymerization to obtain the ethylene-vinyl acetate-vinyl chloride type copolymer. Thus obtained adhesive has been desired to be improved in workability since thickening with lapse of time and foaming property are too much and what is called workable time from when the adhesive is finally prepared to when application work is conducted is short.

The present inventors conducted intensive studies to find an aqueous emulsion adhesive which does not have the above-mentioned problems, and have found, as a result, that an adhesive comprising an ethylene-vinyl acetate-vinyl chloride type copolymer obtained by using an emulsifier consisting essentially of a polyvinyl alcohol in polymerization shows thickening with lapse of time and foaming in low level, provides long workable time, and is excellent in workability. And we have accomplished the present invention.

The present invention provides an aqueous emulsion adhesive obtainable by blending a polyvinyl alcohol and a compound or polymer having isocyanate groups with an aqueous emulsion, which aqueous emulsion comprises an ethylene-vinyl acetate-vinyl chloride type copolymer having a glass transition temperature from -10 to +40°C and comprising 2 to 40% by weight of ethylene, 3 to 93% by weight of vinyl acetate and 5 to 85% by weight of vinyl chloride, said copolymer being obtainable by polymerization in the presence of an emulsifier consisting essentially of 2 to 13 parts by weight of a polyvinyl alcohol based on 100 parts by weight of the total amount of vinyl acetate and vinyl chloride.

The ethylene-vinyl acetate-vinyl chloride type copolymer which is the polymer component of the aqueous emulsion of the present invention comprises 2 to 40 % by weight, preferably 3 to 30 % by weight of ethylene, 3 to 93 % by weight, preferably 5 to 82 % by weight of vinyl acetate and 5 to 85 % by weight, preferably 15 to 82 % by weight of vinyl chloride.

When the amount of ethylene is too small and/or the amount of vinyl acetate is too small and the amount of vinyl chloride is too large, a large amount of a film-forming aid or a plasticizer is required since the film forming property is inferior, and as a result, the workability and adhesion strength of the adhesive lower. When the amount of ethylene is too large or the amount of vinyl acetate is too small, sufficient adhesion strength is not obtained due to lack of cohesion strength of the copolymer. On the other hand, when the amount of vinyl acetate is too large or the amount of vinyl chloride is too small, the adhesive remarkably foams and the adhesion strength is inferior.

The ethylene-vinyl acetate-vinyl chloride type copolymer of the present invention may contain, in addition to ethylene, vinyl acetate and vinyl chloride which are essential constituents, additional constituents copolymerizable with these constituents. These additional constituents can include, vinyl esters such as vinyl propionate, vinyl pivalate, vinyl isononanate, vinyl ester of versatic acid and the like; vinyl halides such as vinyl bromide and the like; (meth)acrylates such as 2-ethylhexyl (meth)acrylate, n-butyl (meth)acrylate, ethyl (meth)acrylate, methyl (meth)acrylate and the like;α, β -unsaturated dicarboxylates such as maleate, crotonate, itaconate, and the like; carboxyl group-containing monomers and anhydrous salts thereof such as acrylic acid, methacrylic acid, crotonic acid, itaconic acid (include half ester), maleic acid (include half ester) and the like; N-methylol derivative monomer such as N-methylolacrylamide, N-butoxymethylacrylamide and the like; hydroxyl group-containing monomers such as 2-hydroxyethyl (meth)acrylate, 2-hydroxypropyl (meth)acrylate, monoallyl ether of polyhydric alcohol and the like; amino group-containing monomers such as dimethylaminoethyl methacrylate, dimethylpropylacrylamide and the like; epoxy group-containing monomers such as glycidyl (meth)acrylate and the like; amide group-containing monomers such as acrylamide, methacrylamide, maleamide and the like; sulfonic group-containing monomers such as sodium vinyl sulfonate, sodium methallyl sulfonate and the like; polyvinyl compounds such as diallyl phthalate, triallyl cyanurate, triallyl isocyanurate, ethylene glycol diacrylate, allyl methacrylate, adipic diacrylate, trimethylolpropane dimethacrylate and the like. These may be used alone or in combination thereof. Here, the content of the additional constituent in the copolymer is preferably not more than 30 % by weight.

The ethylene-vinyl acetate-vinyl chloride type copolymer of the present invention has Tg (glass transition temperature) from -10 to +40 °C, preferably from -5 to +35 °C. When the glass transition temperature is too low, the adhesion strength is weak due to lack of cohesion strength, on the other hand when the glass transition temperature is too high, the adhesion strength is weak due to inferior film forming property.

The ethylene-vinyl acetate-vinyl chloride type copolymer emulsion used in the present invention may be produced by emulsion polymerization. The polymerization condition of the emulsion polymerization is not particularly restricted, and for example, to a pressure resistant autoclave are charged water, a polyvinyl alcohol as an emulsifier, vinyl acetate and vinyl chloride, they are stirred to prepare a monomer emulsified liquid, ethylene is fed into the autoclave to be a specific pressure, then polymerization is conducted using a redox type catalyst to obtain an aqueous emulsion.

The emulsifier used for polymerization of the aqueous emulsion of the present invention consists essentially of a polyvinyl alcohol, and a polyvinyl alcohol may be used alone. The amount of the polyvinyl alcohol is 2 to 13 parts by weight, preferably from 5 to 10 parts by weight based on 100 parts by weight of the total amount of vinyl acetate and vinyl chloride.

When the amount of the polyvinyl alcohol is too small, formation of the protection layer required to keep stability of the emulsion particle is insufficient and the particle is broken during polymerization to form gel, or even if the polymerization is possible, phase separation occurs and substantial function as an emulsion is not accomplished. On the other hand when the amount of the polyvinyl alcohol is too large, the viscosity of the reaction system increases in polymerization reaction, suitable heat removing operation of the reaction heat is difficult, and stability of the emulsion particle lowers.

The polyvinyl alcohol used in the present invention includes a partial saponified polyvinyl alcohol, fully saponified polyvinyl alcohol, and functional group-modified type polyvinyl alcohol such as a sulfonic group modified polyvinyl alcohol, carboxylic group modified polyvinyl alcohol, silanol group modified polyvinyl alcohol, acetoacetylated polyvinyl alcohol and the like. Among them, a partially saponified polyvinyl alcohol and fully saponified polyvinyl alcohol are preferable. Polymerization degree and saponification degree of these polyvinyl alcohols are not particularly restricted, and a polyvinyl alcohol having a polymerization degree of 200 to 2700 and a saponification degree of 70 to 95 % by mol is preferable.

The aqueous emulsion of the present invention preferably has an average particle size of the emulsion particle of 0.1 to 1.5µm. When the average particle size is too small, initial adhesion may be inferior, on the other hand when the average particle size is too large, boiling resistant strength may be inferior.

The adhesive of the present invention is an aqueous emulsion adhesive obtained by blending a polyvinyl alcohol and a compound having isocyanate groups or a polymer thereof to the above-described aqueous emulsion.

The polyvinyl alcohol used in the aforesaid blend may include a partial saponified polyvinyl alcohol, fully saponified polyvinyl alcohol, and modified type polyvinyl alcohol such as a sulfonic group modified polyvinyl alcohol, carboxylic group modified polyvinyl alcohol, silanol group modified polyvinyl alcohol, acetoacetylated polyvinyl alcohol and the like. The amount of the polyvinyl alcohol is preferably from 5 to 200 parts by weight, more preferably from 10 to 150 parts by weight based on 100 parts by weight of the solid components of the aqueous emulsion. When the amount is too small, the workable time may be short, on the other hand when the amount is too large, the water resistance may be inferior.

Further, the compound or polymer having isocyanate groups used in the aforesaid blend is not particularly restricted. More than one isocyanate group may be included in the molecule, and there can be used, for example, triphenylmethane triisocyanate (TTI, Desmodur R: manufactured by Bayer Corp.), tolylene diisocyanate (TDI, Desmodur T: manufactured by Bayer Corp.), methylenebis diphenyl isocyanate (MDI, Desmodur 44: manufactured by Bayer Corp.), hexamethylene diisocyanate (HMDI, Desmodur N: manufactured by Bayer Corp.), trimethylolpropane (TMP)-TDI adduct (Desmodur L: manufactured by Bayer Corp.), Coronate L (Nippon polyurethane Corp.), hydrogenated TDI, hydrogenated MDI, adduct modified compound of HMDI, xylene diisocyanate, 4,4'-dicyclohexylmethane diisocyanate, and the like as representative compounds. Further, as the compound having isocyanate groups, there can be used the polymer thereof, for example, a polyisocyanate based polymer (e.g. Sumidur 44V: manufactured by Sumitomo Bayer Urethane Corp., Milionate: manufactured by Nippon polyurethane Corp.), a mixture obtained by the polyol mixing method, namely a mixture obtained by mixing a polyol such as a hydroxyl group-containing polyester and polyether (e.g. Desmophen) and the like with a polyisocyanate such as the aforesaid Desmodur L and the like, without any problem. The amount of the compound or polymer having isocyanate groups is preferably from 2 to 200 parts by weight, more preferably from 5 to 150 parts by weight based on 100 parts by weight of the solid components of the aqueous emulsion. When the amount is too small, boiling resistant strength may be inferior, on the other hand when the amount is too large, the workable time may be short.

Further, the aqueous emulsion adhesive of the present invention may contain, in addition to the above-mentioned components, wheat powder, starches, defatted soybean powder, clay, kaolin, talc, calcium carbonate, titanium oxide and the like as an extender. The amount to be blended of these extenders differs depending on use, and it is usually not more than 200 parts by weight, preferably not more than 150 parts by weight based on 100 parts by weight of the ethylene-vinyl acetate-vinyl chloride type copolymer emulsion (solid components). The aqueous emulsion adhesive of the present invention may further contain a reaction accelerator such as boric acid, borate, aluminum sulfate, alum, chromium borate and the like.

When the aqueous emulsion adhesive of the present invention is used, adhesion can be sufficiently accomplished using only cold pressing (compression treatment at room temperature), but thermal pressing (compression treatment with heat plate) may be utilized for improving productivity.

When an ethylene-vinyl acetate-vinyl chloride type copolymer emulsion, which can form a film at a temperature of not more than room temperature, is used, a film forming aid or plasticizer is preferably added in a minimum amount to be required. The amount of the film forming aid or plasticizer is preferably not more than 20 parts by weight, more preferably not more than 10 parts by weight based on 100 parts by weight of the solid components of the ethylene-vinyl acetate-vinyl chloride type copolymer emulsion. The film forming aid or plasticizer.includes, for example, carbitol acetate, butyl carbitol acetate, butyl carbitol, ethyl carbitol, butyl cellosolve, ethyl cellosolve, 2,2,4-trimethyl 1,3-pentane diol monoisobutyrate (Texanol), 2,2,4-trimethyl 1,3-pentane diol, 2,2,4-trimethyl 1,3-pentane diol diisobutyrate, dioctyl phthalate, dibutyl phthalate, dibutyl adipate, dioctyl adipate, butyl oleate and the like.

Also, the adhesive of the present invention may further be added appropriately with an antifreezing agent represented by glycols such as ethylene glycol, propylene glycol and the like; an nonionic surfactant type dispersion aid such as a polyethylene oxide-polypropylene oxide block copolymer, polyethylene oxide-alkyl phenol ether, polyethylene oxide-alkyl ether and the like; defoaming agent, antiseptic, mildewproofing agent, coloring agent, solvent, thickening agent and the like in an amount which does not injure the property of the adhesive.

The adhesive of the present invention is particularly suitable for a wood-wood adhesive (laminated lumber adhesive, wood working adhesive, particle board adhesive and the like), wood-plastic material adhesive (e.g. PVC laminated plywood adhesive, foamed resin-wood adhesive) and the like, and is further used as packaging adhesive (paper-paper adhesive, paper-plastic adhesive, paper-aluminum foil adhesive and the like), cloth adhesive (cloth-plastic adhesive, cloth-paper adhesive, cloth-wood adhesive and the like), and building material adhesive (concrete-wood adhesive, wood-various boards adhesive and the like).

The adhesive of the present invention comprising the ethylene-vinyl acetate-vinyl chloride type copolymer emulsion obtained by copolymerization using only polyvinyl alcohol as an emulsifier maintains the adhesion strength at sufficiently high level, provides a long workable time since thickening with lapse of time and foaming of the adhesive are in low level, and is excellent in workability, therefore the adhesive can be used for wide use, particularly can be suitably used for use such as adhesion of a laminated wood for structuring or fixturing.

### Example

The present invention will be specifically described below by examples. However, the present invention is not limited to the examples.

### Example 1

Polyvinyl alcohol (Poval 205 manufactured by Krare Corp.) was used in an amount of 9.0 parts by weight based on the total amount of vinyl acetate and vinyl chloride, and 10 % by weight of ethylene, 9 % by weight of vinyl acetate, 81 % by weight of vinyl chloride were copolymerized using a redox type catalyst. The resulting ethylene-vinyl acetate-vinyl chloride type copolymer emulsion contained 50.2 % of solid components and had a viscosity of 1200 mPa·s and a glass transition temperature of 30°C. To the emulsion was added 3 parts by weight (based on 100 parts by weight of the emulsion) of butyl carbitol acetate as a film forming agent, the resulting mixture was used following the blending formulation below to obtain an adhesive, and the resulting adhesive was evaluated regarding respective measuring items by the method below. The results are shown in Table 2.

### Blending formulation

A blend (solid component 46 %) of aqueous emulsion/15 % aqueous polyvinyl alcohol (Poval 217 manufactured by Krare Corp.) solution/calcium carbonate (NS-100 manufactured by Nitto Hunka kogyo Corp.) = 40/40/20 (weight ratio) was used as a main component, and 15 parts by weight of a MDI based polymer (Sumidur 44V-20: manufactured by Sumitomo Bayer Urethane Corp.) was added as a curing agent based on 100 parts by weight of the main component, to prepare an adhesive.

### Evaluation method

### 1. Evaluation of workability of the adhesive

### (1) viscosity stability with a lapse of time

The viscosity directly after mixing of the main component and the curing agent was measured (measuring temperature: 30°C), and viscosity was measured at a specific interval and thickening magnification was calculated as the ratio of the viscosity at the specific interval to the viscosity directly after mixing, the thickening magnification directly after the mixing being 1.0.

### (2) Foaming property

About 30 g of the adhesive directly after mixing of the main component and the curing agent was charged into a 100 ml measuring cylinder (reaching a height h0), the height of the adhesive at specific interval (ht) was measured and foaming magnification was calculated (foaming magnification = (ht-h0)/h0 x 100(%)).

### 2. Evaluation of adhesion property

### (1) Preparation of test piece

The adhesive blended above (0.06 to 0.09 g) was applied on one surface of each of two pieces of birch straight grain plates (10mm x 25mm x 30mm), the surfaces to which the adhesive was applied were laminated to each other, the laminate was compressed (adhesion property: 24 hours × 8 kg/cm² for normal strength, boiling resistant strength, 10 to 30 minutes × 8 kg/cm² for initial strength) to prepare a test piece.

### (2) Original state strength

The compression shear strength of the above prepared test piece was measured by an autograph manufactured by Shimadzu Corporation.

### (3) Repetitive boiling resistant strength

The test piece prepared above was immersed in boiling water for 4 hours, dried in an oven at 60°C for 20 hours, again immersed in boiling water for 4 hours, then cooled to room temperature by immersing in water of normal (room) temperature for not less than 15 minutes, and the compression shear strength of the test piece in wet condition was measured by the autograph manufactured by Shimadzu Corporation.

### (4) Initial strength

The cleavage strength was measured by the autograph manufactured by Shimadzu Corporation when the compression time was 10, 20 and 30 minutes in the test piece preparing condition above.

### Example 2

The same procedure as in Example 1 was conducted to obtain an adhesive except that an ethylene-vinyl acetate-vinyl chloride type copolymer emulsion containing 50.6 % of solid components and having a viscosity of 1110 mPa·s and a glass transition temperature of 0°C which had been obtained by copolymerization at a copolymerization ratio ethylene/vinyl acetate/vinyl chloride of 20/40/40 % by weight was used. The results are shown in Table 2.

### Example 3

The same procedure as in Example 1 was conducted to obtain an adhesive except that an ethylene-vinyl acetate-vinyl chloride type copolymer emulsion containing 50.2% of solid components and having a viscosity of 950 mPa·s and a glass transition temperature of 25°C was obtained by copolymerization at a copolymerization ratio ethylene/vinyl acetate/vinyl chloride of 30/5/65 % by weight, to this was added 3 parts by weight of butyl carbitol acetate as a film forming agent, and the resulting emulsion was used as an emulsion for evaluation. The results are shown in Table 2.

### Example 4

The same procedure as in Example 1 was conducted to obtain an adhesive except that an ethylene-vinyl acetate-vinyl chloride type copolymer emulsion containing 50.3% of solid components and having a viscosity of 910 mPa·s and a glass transition temperature of 0°C which had been obtained by copolymerization at a copolymerization ratio ethylene/vinyl acetate/vinyl chloride of 20/56/24% by weight was used. The results are shown in Table 2.

### Example 5

The same procedure as in example 1 was conducted to obtain an adhesive except that an ethylene-vinyl acetate-vinyl chloride type copolymer emulsion containing 51.3% of solid components and having a viscosity of 340 mPa.s and a glass transition temperature of 0°C which had been obtained by copolymerization at a copolymerization ratio ethylene/vinyl acetate/vinyl chloride of 20/56/24% by weight using 6 parts by weight of a polyvinyl alcohol (Poval 205 manufactured by Krare Corp.) as an emulsifier was used. The results are shown in Table 2.

### Comparative Examples 1 to 4

The same procedure was conducted to obtain an adhesive except that.blending formulation of the polymer composition, emulsifier, film forming aid were as shown in Table 3. The results are shown in Table 4.

In all examples which suffice the conditions of the present invention, the resulting adhesive maintains the adhesion strength at sufficiently high level, provides a long workable time since thickening with lapse of time and foaming of the adhesive are in low level, and consequently is excellent in workability.

On the other hand, in Comparative Examples 1 and 2 which do not use polyvinyl alcohol as an emulsifier, viscosity change with lapse of time is remarkable, and in Comparative Example 3 which contains no vinyl chloride as a polymer component, foaming is remarkable. Further, in Comparative Example 4 in which vinyl chloride is contained in the copolymer as a polymer component and both a polyvinyl alcohol and a nonionic surfactant are used as an emulsifier, viscosity change with a lapse of time is remarkable.

**Table 1**

| | Example | | | | |
|---|---|---|---|---|---|
| | 1 | 2 | 3 | 4 | 5 |
| Emulsifier *1 | | | | | |
| PVA | 9 | 9 | 9 | 9 | 6 |
| Polymer composition, wt% | | | | | |
| Ethylene | 10 | 20 | 30 | 20 | 20 |
| Vinyl acetate | 9 | 40 | 5 | 56 | 56 |
| Vinyl chloride | 81 | 40 | 65 | 24 | 24 |
| Tg °C | 30 | 0 | 25 | 0 | 0 |
| Film forming aid wt | 3 | 0 | 3 | 0 | 0 |

**Table 2**

| | Example | | | | |
|---|---|---|---|---|---|
| | 1 | 2 | 3 | 4 | 5 |
| Evaluation | | | | | |
| Viscosity change (thickening magnification) | | | | | |
| After 0 hr | 1.0 | 1.0 | 1.0 | 1.0 | 1.0 |
| 0.5 hr | 1.1 | 1.4 | 1.4 | 1.4 | 1.5 |
| 1.0 hr | 1.7 | 1.8 | 1.9 | 2.0 | 1.9 |
| 1.5 hr | 2.1 | 2.3 | 2.5 | 2.6 | 2.3 |

| Foaming property (foaming magnification %) | | | | | |
|---|---|---|---|---|---|
| After 0 hr | 0 | 0 | 0 | 0 | 0 |
| 1.0 hr | 20 | 25 | 25 | 45 | 55 |
| 2.0 hr | 50 | 70 | 60 | 95 | 120 |
| 3.0 hr | 85 | 100 | 90 | 140 | 170 |

| Adhesion property | | | | | |
|---|---|---|---|---|---|
| Original state strength kg/cm² | 180 | 175 | 195 | 170 | 175 |
| Repetitive boiling resistant strength kg/cm² | 55 | 50 | 45 | 35 | 35 |

| Initial adhesion | | | | | |
|---|---|---|---|---|---|
| Original state strength kg/cm² | | | | | |
| 10 minute | 33 | 30 | 29 | 28 | 22 |
| 20 minute | 38 | 38 | 36 | 33 | 29 |
| 30 minute | 43 | 40 | 42 | 38 | 38 |

**Table 3**

| | Comparative Example | | | |
|---|---|---|---|---|
| | 1 | 2 | 3 | 4 |
| Emulsifier *1 | | | | |
| PVA | 0 | 0 | 5 | 2 |
| HCEL | 0.5 | 0 | 0 | 0 |
| NON surfactant | 5 | 0 | 0 | 5 |
| ANI surfactant | 0 | 8 | 0 | 0 |
| Polymer composition, wt% | | | | |
| Ethylene | 20 | 30 | 15 | 20 |
| Vinyl acetate | 40 | 5 | 85 | 50 |
| Vinyl chloride | 40 | 65 | 0 | 30 |
| Tg °C | 0 | 25 | 0 | 0 |
| Film forming aid wt | 0 | 3 | 0 | 0 |

**Table 4**

| | Comparative Example | | | |
|---|---|---|---|---|
| | 1 | 2 | 3 | 4 |
| Evaluation | | | | |
| Viscosity change (thickening magnification) | | | | |
| After 0 hr | 1.0 | 1.0 | 1.0 | 1.0 |
| 0.5 hr | 2.2 | 25.3 | 2.4 | 2.0 |
| 1.0 hr | 3.6 | gel | 2.4 | 6.0 |
| 1.5 hr | 5.8 | | 2.7 | 11.4 |

| Foaming property (foaming magnification %) | | | | |
|---|---|---|---|---|
| After 0 hr | 0 | 0 | 0 | 0 |
| 1.0 hr | 80 | 20 | 140 | 65 |
| 2.0 hr | 160 | 35 | 220 | 140 |
| 3.0 hr | 200 | 40 | *2 | 185 |

| Adhesion property | | | | |
|---|---|---|---|---|
| Original state strength kg/cm² | 180 | 140 | 190 | 180 |
| Repetitive boiling resistant strength kg/cm² | 65 | 55 | 30 | 45 |

| Initial adhesion kg/cm² | | | | |
|---|---|---|---|---|
| Original state strength | | | | |
| 10 minute | 19 | 8 | 30 | 10 |
| 20 minute | 31 | 15 | 40 | 19 |
| 30 minute | 35 | 23 | 47 | 21 |

### *1 Emulsifier

Numerical value indicates parts by weight based on 100 parts by weight of the total amount of vinyl acetate and vinyl chloride

| | |
|---|---|
| PVA | : polyvinyl alcohol |
| HCEL | : hydroxyethylcellulose |
| NON surfactant | : nonionic surfactant |
| ANI surfactant | : anionic surfactant |

*2 measuring is impossible

## Claims

1. An aqueous emulsion adhesive obtainable by blending a polyvinyl alcohol and a compound or polymer having isocyanate groups with an aqueous emulsion, which aqueous emulsion comprises an ethylene-vinyl acetate-vinyl chloride type copolymer having a glass transition temperature from -10 to +40°C and comprising 2 to 40% by weight of ethylene, 3 to 93% by weight of vinyl acetate and 5 to 85% by weight of vinyl chloride, said copolymer being obtainable by polymerization in the presence of an emulsifier consisting essentially of 2 to 13 parts by weight of a polyvinyl alcohol based on 100 parts by weight of the total amount of vinyl acetate and vinyl chloride.

2. An aqueous emulsion adhesive according to claim 1 in which the polyvinyl alcohol used as emulsifier is at least one polyvinyl alcohol selected from partially saponified polyvinyl alcohols and fully saponified polyvinyl alcohols.

3. An aqueous emulsion adhesive according to claim 1 or 2 in which the polyvinyl alcohol used as emulsifier has a polymerization degree of 200 to 2700 and a saponification degree of 70 to 95% by mol.

4. An aqueous emulsion adhesive according to any one of the preceding claims in which the amount of polyvinyl alcohol used as emulsifier is 5 to 10 parts by weight based on 100 parts by weight of the total amount to be used of vinyl acetate and vinyl chloride.

5. An aqueous emulsion adhesive according to any one of the preceding claims in which the ethylene-vinyl acetate-vinyl chloride type copolymer has a glass transition temperature from -5 to +35°C.

6. An aqueous emulsion adhesive according to any one of the preceding claims in which the ethylene-vinyl acetate-vinyl chloride type copolymer comprises 3 to 30% by weight of ethylene.

7. An aqueous emulsion adhesive according to any one of the preceding claims in which the ethylene-vinyl acetate-vinyl chloride type copolymer comprises 5 to 82% by weight of vinyl acetate.

8. An aqueous emulsion adhesive according to any one of the preceding claims in which the ethylene-vinyl acetate-vinyl chloride type copolymer comprises 15 to 82% by weight of vinyl chloride.

9. A product comprising:
a polyvinyl alcohol and a compound or polymer having isocyanate groups, and
an aqueous emulsion comprising an ethylene-vinyl acetate-vinyl chloride type copolymer as defined in claim 1.

10. A process for the preparation of an aqueous emulsion adhesive according to any one of claims 1 to 8, which process comprises copolymerizing 2 to 40% by weight of ethylene, 3 to 93% by weight of vinyl acetate and 5 to 85% by weight of vinyl chloride by emulsion polymerization in the presence of an emulsifier consisting essentially of 2 to 13 parts by weight of a polyvinyl alcohol based on 100 parts by weight of the total amount of vinyl acetate and vinyl chloride, and blending the aqueous emulsion thus obtained with a polyvinyl alcohol and a compound or polymer having isocyanate groups.

11. Use of a blend of a polyvinyl alcohol and a compound or polymer having isocyanate groups with an aqueous emulsion comprising an ethylene-vinyl acetate-vinyl chloride type copolymer as defined in claim 1 as an adhesive.
